# EUROPEAN PATENT SPECIFICATION

(11) **EP 1 120 034 B1**
(45) Date of publication and mention of the grant of the patent: **26.01.2005**
(21) Application number: 01201697.8
(22) Date of filing: 29.06.1995
(51) Int. Cl.: A01J 5/017, A01K 1/12

(54) **A construction including an implement for automatically milking animals**
Konstruktion mit einem Gerät zum automatischen Melken von Tieren
Structure contenant une machine à traire automatique

(30) Priority: 04.07.1994 NL 9401113
(43) Date of publication of application: 01.08.2001
(62) Divisional of application: 95923587.0
(73) Proprietor: MAASLAND N.V., 3147 PA Maassluis (NL)
(72) Inventor: van der Lely, Cornelis, 6300 Zug (CH)
(74) Representative: Corten, Maurice Jean F.M.

(56) References cited:
- EP-A- 0 306 579
- EP-A- 0 360 354
- EP-A- 0 440 313
- WO-A-93/13651

## Description

The present invention relates to a construction including an implement for automatically milking animals, such as cows, according to the preamble of claim 1.

A construction of this type is known from the European patent application EP-A1-0 360 354. Herein an implement for milking an animal is described, which implement includes a robot arm which can be moved to under the animal. Said robot arm carries near its end teat cups and sensor means for determining the position of the teats of the animal. The sensor means, which comprise a source of electromagnetic radiation, are arranged on a movable member provided near and movably in respect to the robot arm end. The movable member is constituted as a slide.

There might however be a disadvantage if such a construction is not always working satisfactorily. The invention has as an object to improve such a construction.

The construction is improved in that the detector is connected via a four-bar linkage to a robot arm which is part of the robot arm construction, the robot arm being pivotal about a vertical shaft, said detector being capable of rotating in a mainly horizontal plane, said detector being connected, capably of pivoting about its own longitudinal shaft, to the four-bar linkage, said four-bar linkage itself being connected capable of pivoting about a vertical shaft to the robot arm. In this situation, the scanning beam of the detector can be positioned such that it can move up and down and to and fro. So as to render it possible to detect teats which are located at different heights above the floor of the milking box, the detector can perform a scanning motion through at least 5 cms, and preferably through approximately 10 cms in the vertical direction. The robot arm construction itself is preferably attached to a side of a milking box or arranged closely thereto. The robot arm construction is then more in particular of such a design that the detector can be moved to outside the milking box.

When the detector becomes contaminated, this may be to the detriment of the accuracy with which the position of the teats is determined, whilst it is even possible that a positional determination cannot be effected at all. In order to solve this problem, the implement may be fitted with a cleaning member for cleaning the detector. This cleaning member is preferably arranged outside the milking box, in connection with the side wall of the milking box. More in particular when the detector is constituted by a laser, this detector has a window which can get dirty. For that reason, the cleaning member may be provided with spraying and/or blowing means for spraying a cleaning liquid or blowing air, respectively, against the window, thus cleaning the window. This cleaning operation may be effected after each milking turn; the frequency of cleaning the window may be lower when it is found that the window is contaminated less frequently.

The motion of the component parts of the robot arm construction and the motion of the detector can be performed by means of computer-controlled stepping motors. Both for this function and in general for controlling the entire milking procedure and the procedure of automatically connecting and disconnecting the teat cups, a computer is used.

The implement further includes an animal identification system connected to this computer, whilst in the computer a control programme adapted to the individual animals for moving the detector to an animal-specific position under the udder is stored. The position from which the detector can detect in the most accurate manner the position of the teats of the animal, depends on the position of the teats and will consequently depend on the individual animals. After the position of the teats has been determined, the teat cups can be connected. The implement is then arranged such that optionally the four teat cups are couplable simultaneously or one after the other to the teats of an animal, whilst the teat cups are further individually uncouplable.

For a better understanding of the invention and to show how the same may be carried into effect, reference will now be made, by way of example, to the accompanying drawings, in which:
Figure 1 is a side view of a milking box of the invention;
Figure 2 is a rear view of a milking robot, a teat cup being connected to a teat of an animal standing in the milking box;
Figure 3 is a rear view of the milking robot, wherein the teat cups are connected to the teats of an animal present in the milking box and wherein the robot arm is thereafter retracted to outside the milking box;
Figure 4 is a plan view of the milking box with the milking robot, wherein the teat cups have all four been connected to the teats of an animal standing in the milking box and wherein the robot arms have thereafter been retracted to outside the milking box;
Figure 5 is a side view of a milking box accommodating a cow, of which the front and rear teats are at unequal heights, and in which figure a detector is shown in the position in which it can determine the location of the rear teats, and
Figure 6 is a plan view of the milking box shown in Figure 5 containing the detector, and the manner in which this detector is movable and cleanable.

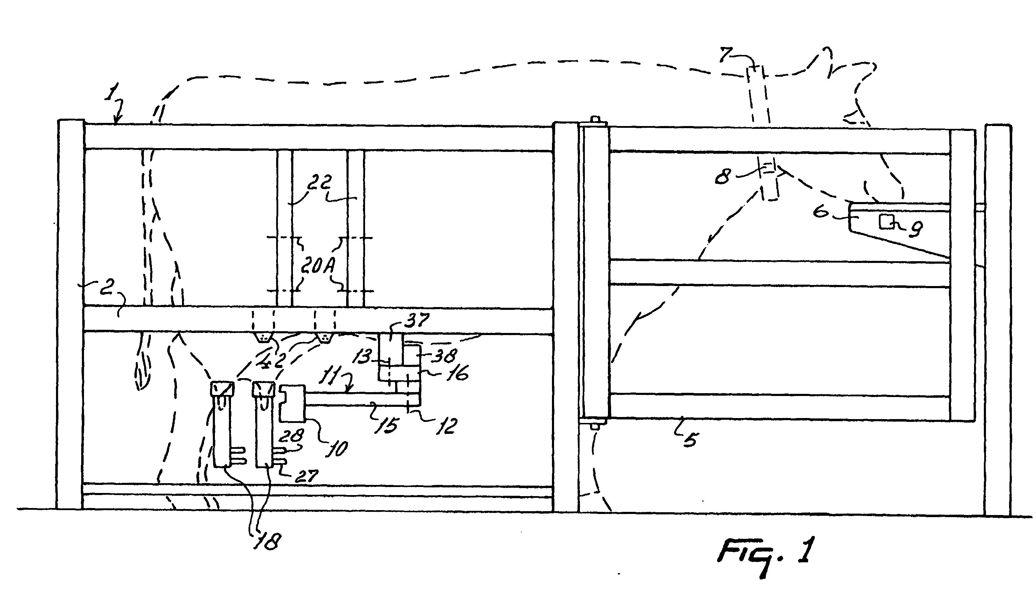

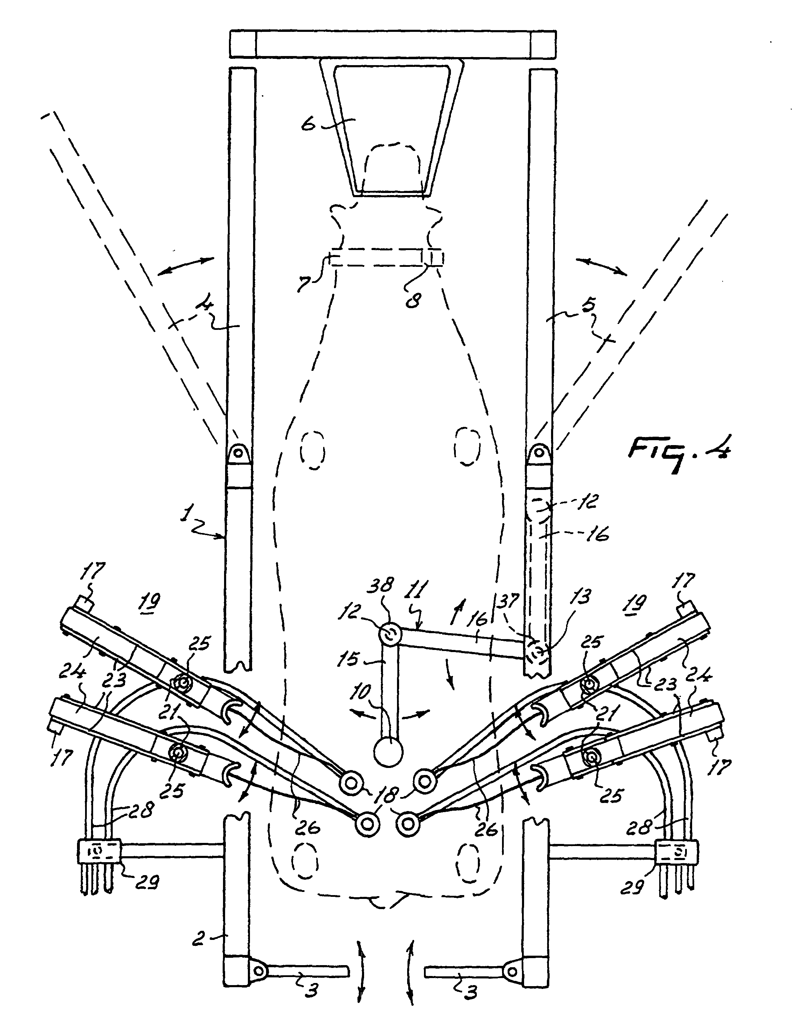

Figure 1 shows, in a side view, a milking box 1 in which a cow to be milked is present. The milking box 1 includes a railing 2 which limits the milking box at all four sides, an entrance door 3 at the rear side and two exit doors 4 and 5 having been arranged in this railing at the two longitudinal sides (see Figure 4). Via one of these exit doors the animal can be conducted from the milking box to a shed area or a pasture, whilst via the other door the animal can be conducted to a special isolation area, e.g. because mastitis has been detected during milking. The entrance and exit doors are under the control of a computer system, not further shown. At the leading side of the milking box 1 a feeding trough 6 has been disposed, which is part of an automatic feeding system. The animals to be milked wear a collar 7, which is equipped with a transponder 8 which cooperates with a sensor 9 disposed at or near the feeding trough 6. When an animal enters the milking box 1 and has advanced that far that it can put its head into the feeding trough 6, the distance between the transponder 8 and the sensor 9 is such that communication between the two elements 8 and 9 occurs. The transponder 8 and the sensor 9, which is connected to the computer system, constitute an animal identification system. As soon as communication between the transponder 8 and the sensor 9 becomes possible, the animal is identified, which has for its result that a file stored for this animal in the memory of the computer system becomes accessible, which file includes various data, such as data for the automatic supply of food, the automatic connection of the teat cups and the subsequent automatic milking operation and for monitoring the heath condition of this animal.

After the animal has entered the milking box 1 and has been identified therein, a detector 10, here in the form of a laser detector, is moved to under the animal. In the Figures 1 and 4, the detector 10 is disposed on a robot arm system 11, formed by robot arms 15 and 16 which are pivotal about round vertical shafts 12 and 13, this robot arm system 11 being attached to the railing 2 in such a manner that it is pivotal about the shaft 13. The robot arms 15 and 16 are pivotal with the aid of computer-controlled motors 37 and 38, for which stepping motors are preferably employed. Using the detector 10, the position of the teats relative to the milking box 1 can be determined, whereafter teat cups 18 can be fitted on the teats. The detector 10 and the means for fitting the teat cups 18 to the teats together form a milking robot. In the embodiment shown, these means include a separate robot arm construction 9 for each of the teat cups 18. Such a robot arm construction 19 includes a first four-bar linkage 20, with the aid of which a vertical carrier 21 is connected capable of moving in the upward direction to frame portions 22 of the railing 2. The pivotal shafts, by means of which this four-bar linkage is connected to the frame portions, are denoted by 20A. At the lower side of the carrier 21 there is present a second four-bar linkage 23, with the aid of which a robot arm 24 is movable from outside the milking box 1 into the milking box to under an animal present therein and can again be retracted to outside the milking box. This robot arm 24 is furthermore pivotal about a vertical shaft 25 relative to the carrier 21. Each of the robot arms 24 acts as a carrier for one or the teat cups 18. By means of the first and second four-bar linkages 20 and 23, respectively, and the pivotal construction about the shaft 25, the teat cup 18 connected to the robot arm 24 can be moved omnidirectionally. In the embodiment shown, the pivotal motion of the robot arm 24 round the shaft 25 is realized by a computer-controlled motor 14, the reciprocal motion of the robot arm 24 relative to the carrier 21 by a computer-controlled motor 17, whilst the up-and-down motion is realized with the aid of the first four-bar linkage by a computer-controlled operating cylinder 41, preferably a pneumatic cylinder. The motors 14 and 17 are preferably stepping motors.

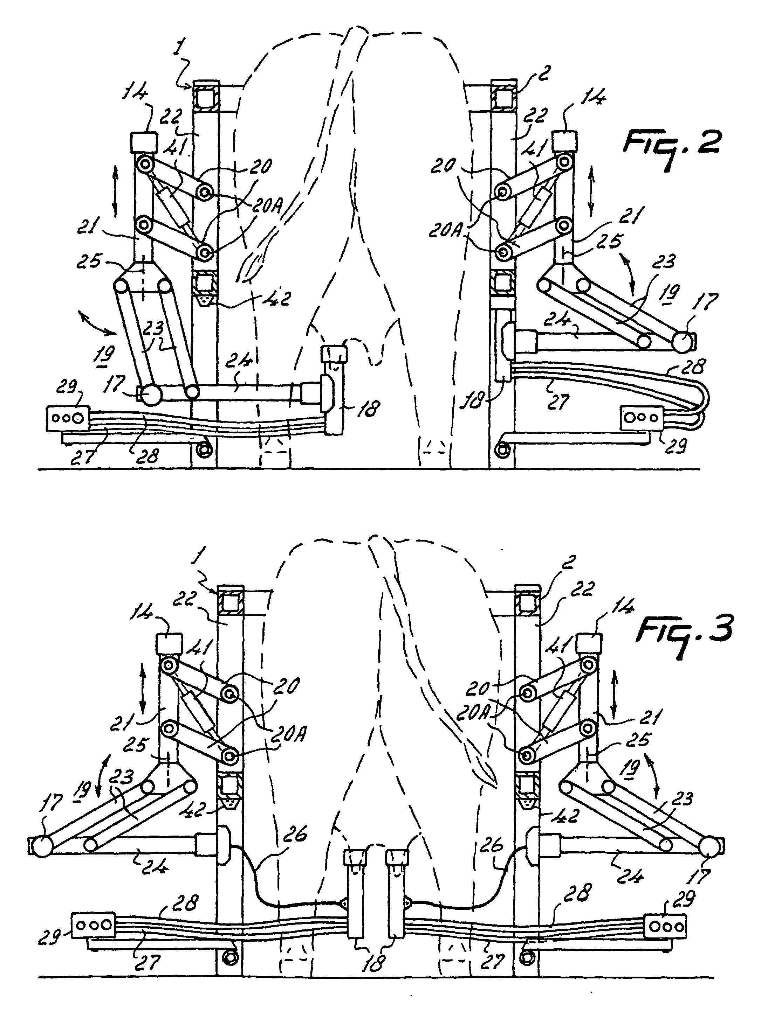

A teat cup 18 is connected to the robot arm 24 by means of a flexible element, such as a cord 26, which cord is not only connected to a teat cup 18 but also to an operating cylinder, preferably a pneumatic cylinder, accommodated in the robot arm 24. If, as is shown in Figure 2, a teat cup 18, carried by the robot arm 24, is fitted on a teat, then, as soon as the teat cup 18 has been sucked to the teat with the aid of the vacuum produced therein, the cylinder accommodated in the robot arm 24 will be enabled, so that the robot arm 24 can be retracted to outside the milking box 1 and the teat cup 18 remains connected to the robot arm 24 only by the cord 26 and will, therefore, have a sufficient freedom of movement to track the animal's movements. In this situation, it may happen that the teat cups 18 are inhibited in their free motional capability by milk tubes 27 and possible pulsation tubes 28, more in particular when these tubes have been secured to the robot arm construction 19. It is, therefore, advantageous when the tubes 27, 28 can move as freely as possible and do not hamper the teat cups 18 when they follow the animal's movements. To that end, the tubes 27, 28 connected to the teat cups 18 extend during milking, taken in a plan view, from the teat cups to which these tubes are connected, obliquely forwardly in the direction of walk of the animal and outwardly and thereafter the tubes extend in the shape of a loop (see Figure 4). From the teat cups the tubes 27, 28 extend to both sides of the milking box to beside the milking box. The tubes extend in the shape of a loop to the points of connection 29, provided at the side of the milking box, for the tubes 27, 28. The loop-shaped arrangement of the tubes increases the free motional capability of the teat cups. The further milk lines and vacuum lines of the milking system are connected to the points of connection. As two robot arm constructions 19 are disposed on both sides of the milking box 1, only one point of connection 29 on both sides is sufficient. Of course, there may be a point of connection for the tubes 27, 28 for each robot arm construction. Since the robot arms 24 are movable from outside the box obliquely rearwardly and inwardly to under the animal, the tubes 27 and 28 will first extend from a teat cup approximately in the same direction as in which the relevant robot arm 24 is located, whereafter the tubes extend in the shape of a loop transversely underneath the robot arm to the relevant point of connection 29. As between the teat cups 18 and the points of connection 29 the tubes are not connected to anything else, they can move freely near the milking box floor. Consequently, they experience a slight resistance and will substantially not obstruct the motion of the teat cups. When the teat cups have been connected to the teats, then the tubes 27, 28 will extend in a mainly horizontal plane and the tubes will be movable in this plane (see Figure 3). When the teat cups are to be uncoupled, then, because of the fact that the robot arms have been moved to outside the milking box during milking, these robot arms must first be moved towards the teat cups, whilst then simultaneously or shortly thereafter the operating cylinders in the robot arms 24 can be energized in order to pull the teat cups up against the holder at the end of the robot arm 24. Since there are four robot arm constructions 19 which operate independently of each other, the teat cups can be coupled both simultaneously and one after the other and independently of each other to the teats of an animal. Also uncoupling of a teat cup can be effected independently of the other teat cups.

When, after the milking operation has ended, a teat cup 18 has been pulled up against a relevant robot arm 24 and this arm has thereafter been returned to its position of rest outside the milking box, the teat cup can be automatically cleaned in this rest position. To that end (see Figures 1 to 3), spray heads 42 connected to a (non-shown) washing circuit are positioned at or near both sides of the milking box. Teat cups are connectable independently of each other to these spray heads 42, more in particular when the robot arms 24 carrying the teat cups 18 have been moved to their position of rest.

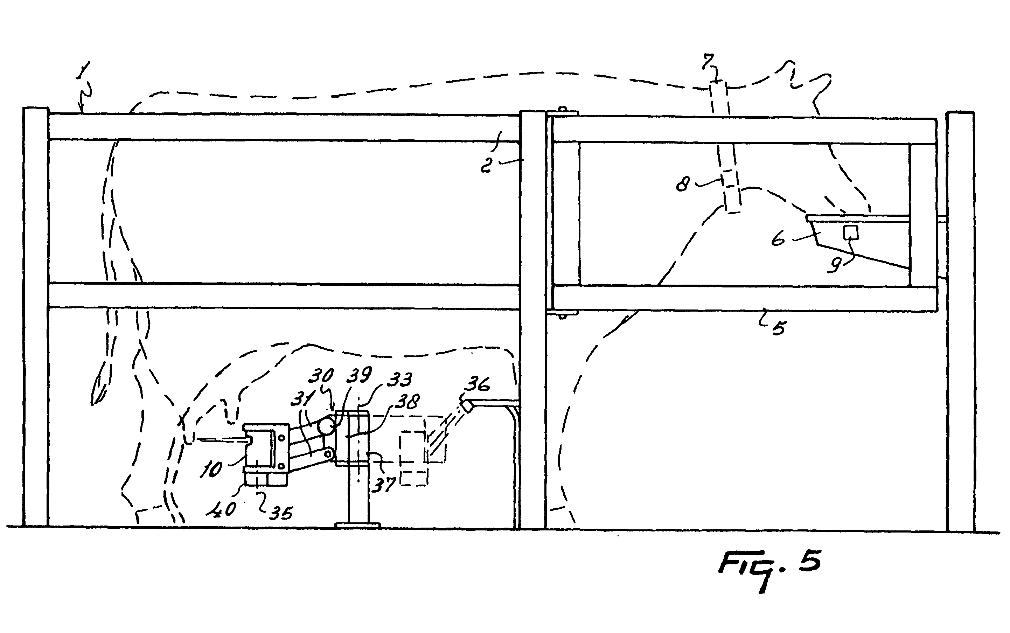

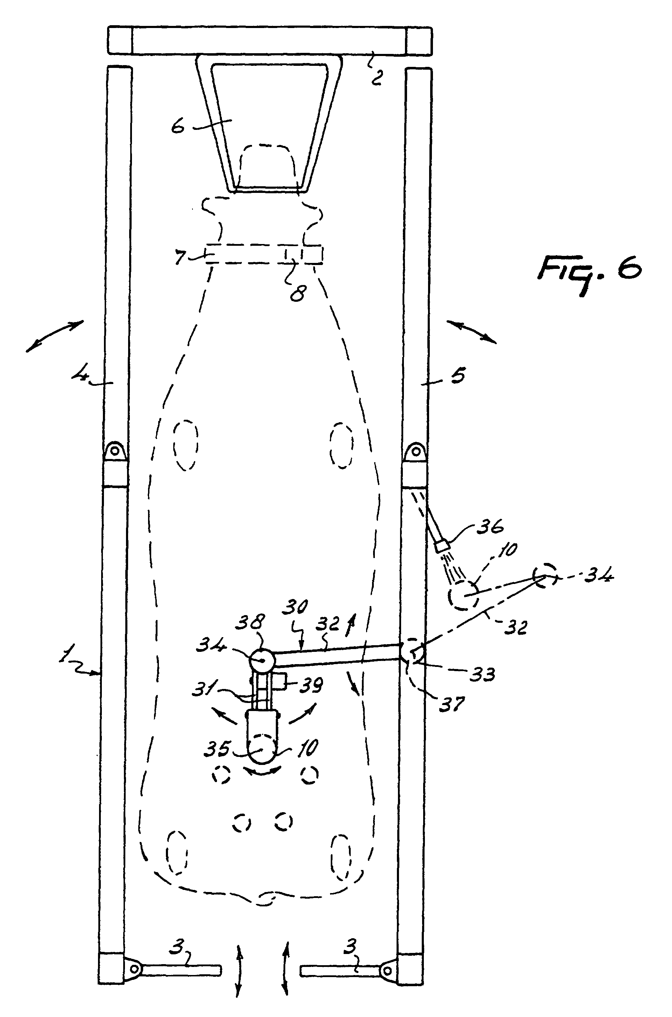

Contrary to the cow standing in the milking box shown in Figure 1, the cow in the milking box shown in Figure 5 has teats which are at unequal heights. It regularly happens that cows have teats which are located very closely next to each other and/or are at different heights. Because of the advantageous construction of a separate robot arm structure for the detector 10, it becomes possible to determine also the position of such teats. Such a robot arm structure for the detector 10 is illustrated in Figures 5 and 6. The means for the connection of the teat cups have been omitted from these drawings. The detector 10 is located on a robot arm structure 30, which is of such a design that the detector is omnidirectionally or substantially omnidirectionally movable in the milking box. The detector 10 is connected via a four-bar linkage 31 to a robot arm 32, which is part of the robot arm structure 30. The robot arm 32 is pivotal about a vertical shaft 33, arranged at the side of the milking box 1. The four-bar linkage 31 itself is connected capable of pivoting about a vertical shaft 34 to the robot arm 32. The detector 10 is further connected, capable of pivoting about its own longitudinal shaft 35, to the four-bar linkage 31 (see Figure 5). Because of the feature that it is pivotal about the shafts 33, 34 and 35 and the feature that it is movable in height with the aid of the four-bar linkage 31, the detector 10 can move around the teats in all positions and more particularly always in such a position that the teats can be detected, whatever their positions relative to each other. The four-bar linkage 31 and the pivotability of the detector 10 about its own longitudinal shaft 35 renders it possible for the detector to effect a scanning motion in different directions, so that also teats differing from normal teats can be detected. The scanning motion in the upward direction can then be effected through at least approximately five centimetres and can preferably amount to approximately ten centimetres in the vertical direction. Should there be animals of which the difference in height between the front and rear teats of the udder is still larger, then the pivotal motion can be adapted thereto.

In an embodiment of the invention, the detector is constituted by a laser detector and positioned as such in a housing having a window, through which the laser beam is transmitted. When this window gets dirty, the detection of the teats may not be sufficiently accurate. It is, therefore, important to provide the implement with means, with which the detector 10 can be cleaned. To enable cleaning in an efficient manner, the pivotal motion about the shafts 33 and 34 is such that the detector 10 can be moved to outside the milking box 1 to a cleaning position, as indicated by broken lines in Figure 6. In this position, the detector can then be cleaned using a cleaning member 36 provided for that purpose. This cleaning member 36 may include spraying and/or blowing means for spraying a cleaning agent or blowing air against the window of the detector 10, respectively.

Performing the pivotal motions about the shafts 33 and 34 and a motion in the upward direction by means of the four-bar linkage 31, as well as the rotation of the detector 10 about its own longitudinal shaft are monitored by computer-controlled motors, preferably stepping motors 37, 38, 39 and 40. Although in many cases the detector can be placed in a fixed working position, shown in Figure 6, it may sometimes be necessary for the detector 10 to be operative in a plurality of positions to enable a determination of the position of the various teats. Thus, it may be necessary for the detector 10 to be arranged for the determination of the position of the front teats in a first working position in the midway point between and before the leading teats, whilst for the determination of the position of the trailing teats the detector must be placed in a position further to the rear. It may alternatively be possible that the detector must not be arranged in the midway point between the teats, but more to the side; the latter will more specifically be the case when one teat would be in the shadow of the other teat relative to the detector or when two teats are very close to each other. Since the relative position of the teats of the several animals is known, this can be taken into account on arranging the detector in the working position under the animal. The computer system may include a control programme adapted to the individual animals for moving the detector to an animal-specific position under the udder, which control programme can be addressed with the aid of the animal identification system for the relevant animal. This animal-attuned control program can be triggered on the basis of data present in the computer system in the data file for each animal. The detector 10 consequently has a position of rest (indicated by broken lines in Figure 4), as well as a cleaning position (see Figure 6) and one or more working positions adapted to the individual animals.

The invention is in no way limited to the embodiments described here, but also comprises all the modifications which may be applied by a person skilled in the art and which are within the scope of the claims described hereafter.

## Claims

1. A construction including an implement for automatically milking animals, such as cows, having one or more milking boxes (1) and one or more milking robots for automatically connecting teat cups to the teats of the animals, whilst the implement further includes a detector (10) for determining the position of the teats, the detector (10) being arranged for performing a scanning motion in different directions, **characterized in that** the detector (10) is connected via a four-bar linkage (31) to a robot arm (32) which is part of the robot arm construction, the robot arm (22) being pivotal about a vertical shaft (33), said detector (10) being capable of rotating in a mainly horizontal plane, said detector (10) being connected, capably of pivoting about its own longitudinal shaft (35), to the four-bar linkage (31), said four-bar linkage (31) itself being connected capable of pivoting about a vertical shaft (34) to the robot arm (32).

2. A construction as claimed in claim 1, **characterized in that** the scanning beam of the detector (10) is disposed such that it can be moved up and down and to and fro.

3. A construction as claimed in claim 1 or 2, **characterized in that** the detector (10) is of such a construction that a milking robot can connect the teat cups to the teats of an animal, which teats might be at different heights above the floor of the milking box.

4. A construction as claimed in any one of the preceding claims, **characterized in that** the detector (10) can perform a scanning motion through at least 5 cms, and preferably through approximately 10 cms in the vertical direction.

5. A construction as claimed in any one of the preceding claims, **characterized in that** the robot arm construction is attached to or is disposed near the side of the milking box (1).

6. A construction as claimed in any one of the preceding claims, **characterized in that** the robot arm construction is designed such that the detector (10) is movable to outside the milking box (1).

7. A construction as claimed in any one of the preceding claims, **characterized in that** the implement includes a cleaning member (36) for cleaning the detector (10).

8. A construction as claimed in claim 7, **characterized in that** the cleaning member (36) is disposed, in connection with the side wall (5) of the milking box (1), outside the milking box (1).

9. A construction as claimed in claim 7 or 8, **characterized in that** the cleaning member (36) includes spraying and/or blowing means for spraying a cleaning liquid and/or blowing air against the window of the detector (10).

10. A construction as claimed in any one of the preceding claims, **characterized in that** the detector (10) is constituted by a laser.

11. A construction as claimed in any one of the preceding claims, **characterized in that** moving the component parts of the robot arm construction and moving the detector (10) is performed by means of computer-controlled stepping motors.

12. A construction as claimed in any one of the preceding claims, **characterized in that** the implement includes an animal identification system connected to a computer, in which computer a control programme adapted to the individual animals for moving the detector (10) to an animal-specific position under the udder is stored.

13. A construction as claimed in any one of the preceding claims, **characterized in that** the implement is arranged such that optionally the four teat cups (18) are couplable simultaneously or one after the other to the teats of an animal, whilst the teat cups (18) are further individually uncouplable.

## Patentansprüche

1. Anlage mit einer Vorrichtung zum automatischen Melken von Tieren, wie z. B. Kühen, die eine oder mehrere Melkboxen (1) und einen oder mehrere Melkroboter zum automatischen Anschließen von Zitzenbechern an die Zitzen der Tiere aufweist, wobei die Vorrichtung ferner einen Detektor (10) zum Ermitteln der Position der Zitzen umfaßt, wobei der Detektor (10) derart angeordnet ist, daß er eine abtastende Bewegung in unterschiedlichen Richtungen durchführt,
**dadurch gekennzeichnet, daß** der Detektor (10) über ein Gelenkviereck (31) mit einem Roboterarm (32) verbunden ist, der Teil der Roboterarm-Konstruktion ist, wobei der Roboterarm (32) um eine vertikale Achse (33) schwenkbar ist, wobei der Detektor (10) in einer überwiegend horizontalen Ebene drehbar ist, wobei der Detektor (10) um seine eigene Längsachse (35) drehbar mit dem Gelenkviereck (31) verbunden ist, wobei das Gelenkviereck (31) selbst um eine vertikale Achse (34) schwenkbar mit dem Roboterarm (32) verbunden ist.

2. Anlage nach Anspruch 1,
**dadurch gekennzeichnet, daß** der Abtaststrahl des Detektors (10) so angeordnet ist, daß er nach oben und unten sowie nach vorn und hinten bewegt werden kann.

3. Anlage nach Anspruch 1 oder 2,
**dadurch gekennzeichnet, daß** der Detektor (10) derart ausgebildet ist, daß ein Melkroboter die Zitzenbecher an die Zitzen eines Tieres anschließen kann, wobei die Zitzen in unterschiedlichen Höhen über dem Boden der Melkbox angeordnet sein können.

4. Anlage nach einem der vorhergehenden Ansprüche,
**dadurch gekennzeichnet, daß** der Detektor (10) eine abtastende Bewegung über mindestens 5 cm und vorzugsweise über etwa 10 cm in vertikaler Richtung durchführen kann.

5. Anlage nach einem der vorhergehenden Ansprüche,
**dadurch gekennzeichnet, daß** die Roboterarm-Konstruktion an oder nahe der Seite der Melkbox (1) angebracht ist.

6. Anlage nach einem der vorhergehenden Ansprüche,
**dadurch gekennzeichnet, daß** die Roboterarm-Konstruktion derart ausgebildet ist, daß der Detektor (10) aus der Melkbox (1) herausbewegt werden kann.

7. Anlage nach einem der vorhergehenden Ansprüche,
**dadurch gekennzeichnet, daß** die Vorrichtung ein Reinigungsglied (36) zum Reinigen des Detektors (10) enthält.

8. Anlage nach Anspruch 7,
**dadurch gekennzeichnet, daß** das mit der Seitenwand (5) der Melkbox (1) verbundene Reinigungsglied (36) außerhalb der Melkbox (1) angeordnet ist.

9. Anlage nach Anspruch 7 oder 8,
**dadurch gekennzeichnet, daß** das Reinigungsglied (36) Sprüh- und/oder Blasvorrichtungen zum Sprühen einer Reinigungsflüssigkeit und/oder Blasen von Luft auf das Fenster des Detektors (10) enthält.

10. Anlage nach einem der vorhergehenden Ansprüche,
**dadurch gekennzeichnet, daß** der Detektor (10) durch einen Laser gebildet ist.

11. Anlage nach einem der vorhergehenden Ansprüche,
**dadurch gekennzeichnet, daß** das Bewegen der Teile der Roboterarm-Konstruktion und das Bewegen des Detektors (10) mit Hilfe von rechnergesteuerten Schrittmotoren erfolgt.

12. Anlage nach einem der vorhergehenden Ansprüche,
**dadurch gekennzeichnet, daß** die Vorrichtung ein mit einem Computer verbundenes Tieridentifikationssystem enthält, wobei in dem Computer ein Steuerprogramm gespeichert ist, das auf die einzelnen Tiere abgestimmt ist, um den Detektor (10) in eine tierspezifische Position unter dem Euter zu bewegen.

13. Anlage nach einem der vorhergehenden Ansprüche,
**dadurch gekennzeichnet, daß** die Vorrichtung so angeordnet ist, daß die vier Zitzenbecher (18) wahlweise gleichzeitig oder nacheinander an die Zitzen eines Tieres anschließbar sind, wobei die Zitzenbecher (18) ferner einzeln abnehmbar sind.

## Revendications

1. Structure comprenant un dispositif pour traire automatiquement des animaux, tels que des vaches, comportant un ou plusieurs box de traite (1) et un ou plusieurs robot(s) de traite destiné(s) à relier automatiquement des gobelets trayeurs aux trayons des animaux, tandis que le dispositif comprend en outre un capteur (10) destiné à déterminer la position des trayons, le capteur (10) étant disposé de manière à effectuer un mouvement de balayage dans différentes directions, **caractérisée en ce que** le capteur (10) est relié, par l'intermédiaire d'un mécanisme articulé (31) à quatre barres, à un bras robotisé (32) faisant partie de la structure formant bras robotisé, le bras robotisé (32) pouvant pivoter autour d'un arbre vertical (33), ledit capteur (10) étant capable de pivoter dans un plan principalement horizontal, ledit capteur (10) étant relié au mécanisme articulé (31) à quatre barres de manière à pouvoir pivoter autour de son propre arbre longitudinal (35), ledit mécanisme articulé (31) à quatre barres étant lui-même relié au bras robotisé (32) de manière à pouvoir pivoter autour d'un arbre vertical (34).

2. Structure selon la revendication 1, **caractérisée en ce que** le faisceau de balayage du capteur (10) est disposé de manière à pouvoir être déplacé de haut en bas et effectuer des mouvements de va-et-vient.

3. Structure selon la revendication 1 ou 2, **caractérisée en ce que** le capteur (10) présente une structure telle qu'un robot de traite peut relier les gobelets trayeurs aux trayons d'un animal, lesquels trayons peuvent se situer à des hauteurs différentes au-dessus du plancher du box de traite.

4. Structure selon l'une quelconque des revendications précédentes, **caractérisée en ce que** le capteur (10) peut effectuer un mouvement de balayage sur au moins 5 cm, et de préférence sur environ 10 cm, dans le sens vertical.

5. Structure selon l'une quelconque des revendications précédentes, **caractérisée en ce que** la structure formant bras robotisé est reliée à ou disposée à proximité du côté du box de traite (1).

6. Structure selon l'une quelconque des revendications précédentes, **caractérisée en ce que** la structure formant bras robotisé est conçue de telle sorte que le capteur (10) puisse être déplacé vers l'extérieur du box de traite (1).

7. Structure selon l'une quelconque des revendications précédentes, **caractérisée en ce que** le dispositif comprend un élément de nettoyage (36) destiné à nettoyer le capteur (10).

8. Structure selon la revendication 7, **caractérisée en ce que** l'élément de nettoyage (36) est disposé à l'extérieur du box de traite (1) tout en étant relié à la paroi latérale (5) du box de traite (1) .

9. Structure selon la revendication 7 ou 8, **caractérisée en ce que** l'élément de nettoyage (36) comprend des moyens de pulvérisation et/ou de soufflage destinés à pulvériser un liquide nettoyant et/ou à souffler de l'air sur la fenêtre du capteur (10).

10. Structure selon l'une quelconque des revendications précédentes, **caractérisée en ce que** le capteur (10) est constitué d'un laser.

11. Structure selon l'une quelconque des revendications précédentes, **caractérisée en ce que** les éléments constitutifs de la structure formant bras robotisé et le capteur (10) sont déplacés à l'aide de moteurs pas à pas commandés par ordinateur.

12. Structure selon l'une quelconque des revendications précédentes, **caractérisée en ce que** le dispositif comprend un système d'identification des animaux relié à un ordinateur, dans lequel est stocké un programme de commande adapté aux animaux individuels pour déplacer le capteur (10) dans une position, spécifique à chaque animal, se trouvant sous le pis.

13. Structure selon l'une quelconque des revendications précédentes, **caractérisée en ce que** le dispositif est disposé de telle sorte que les quatre gobelets trayeurs (18) puissent éventuellement être couplés simultanément, ou l'un après l'autre, aux trayons d'un animal, tandis que les gobelets trayeurs (18) ne peuvent en outre pas être couplés de manière individuelle.
